# EUROPÄISCHE PATENTANMELDUNG

(11) **EP 3 032 233 A1**
(43) Veröffentlichungstag der Anmeldung: **15.06.2016**
(21) Anmeldenummer: 14196768.7
(22) Anmeldetag: 08.12.2014
(51) Int. Cl.: G01L 3/14, F16D 7/04

(54) **Vorrichtung zur Drehmomentbestimmung sowie Antrieb zum Betätigen eines Maschinenelements**

(71) Anmelder: BÜ-SCH ARMATUREN GMBH, 90478 Nürnberg (DE)
(72) Erfinder: Lang, Joachim, 08304 Schönheide (DE); Faltenbacher, Frank, 90610 Winkelhaid (DE)
(74) Vertreter: Stippl, Hubert

(57) **Zusammenfassung**

Die vorliegende Erfindung betrifft eine Vorrichtung zur opto-elektronischen Drehmomentbestimmung mit
einer ersten antriebseitigen Welle (2),
einer zweiten abtriebseitigen Welle (3),
einer ersten Kodierscheibe (4), die mit der ersten antriebseitigen Welle (2) drehfest verbunden ist,
einer zweiten Kodierscheibe (5), die mit der zweiten abtriebseitigen Welle (3) drehfest verbunden ist,
einer ersten Lichtschranke (6), die die Drehbewegung der ersten Kodierscheibe (4) abtastet,
einer zweiten Lichtschranke (7), die die Drehbewegung der zweiten Kodierscheibe (5) abtastet,
einer elektronischen Auswerteeinheit (8) zur Erfassung und Auswertung der von der ersten Lichtschranke (6) sowie zweiten Lichtschranke (7) stammenden Signale, wobei
ein erster Kupplungsflansch (9) vorgesehen ist, der mit der ersten antriebseitigen Welle (2) in Verbindung steht,
ein zweiter Kupplungsflansch (10) vorgesehen ist, der mit der zweiten abtriebseitigen Welle (3) in Verbindung steht, eine der beiden Wellen (2 oder 3) in axialer Richtung verschiebbar angeordnet ist,
die jeweilige Stirnfläche des ersten sowie zweiten Kupplungsflansches (9, 10) mindestens eine schiefe Ebene (11, 12, 13, 14) aufweist,
die schiefen Ebenen (11, 12 bzw. 13, 14) der sich gegenüberliegenden Stirnflächen in einer Grundstellung einen ein Drehmoment übertragenden Verbund bilden, und bei Erhöhung des Drehmoments eine Veränderung der Drehwinkelstellung der Kupplungsflansche (9, 10) zueinander erfassbar und daraus das Drehmoment ermittelbar ist.

## Beschreibung

Die vorliegende Erfindung betrifft eine Vorrichtung zur opto-elektronischen Drehmomentbestimmung sowie einen Antrieb zum Betätigen eines Maschinenelements oder einer Armatur, insbesondere einer Schieberarmatur.

### Technologischer Hintergrund

Messvorrichtungen zur Bestimmung eines an einer Welle oder an einer Kupplung wirksamen Drehmoments sind in unterschiedlichsten Ausführungsformen bekannt. Beispielsweise kann die Drehmomentmessung mittels Dehnmessstreifen erfolgen, welche an der Oberfläche einer Achse oder Welle befestigt werden. Die Dehnung an der Zylinderoberfläche ist dem Drehmoment der Achse oder Welle direkt proportional. Damit auch eine Verdrehung bzw. Torsion der Welle messbar ist, ist es erforderlich, dass diese eine bestimmte Länge aufweist. Die Messwert-übertragung erfolgt zum Beispiel über Schleifringe, die einem hohen Verschleiß unterworfen sind.

Zudem sind opto-elektronische Verfahren zur Drehmomentbestimmung bekannt, bei welchen die Torsion eines mit einem Drehmoment belasteten Bauteils, beispielsweise einer Welle, gemessen wird, indem der Überdeckungsgrad zweier nebeneinander auf der Welle angebrachter Scheiben gemessen wird. Diese haben jeweils radial an ihrem Umfang gleichmäßig verteilte Aussparungen oder Fenster. Die Aussparungen oder Fenster der beiden Scheiben sind so angeordnet, dass sie sich ohne Drehmoment vollständig überlappen. Bei einer Verdrehung bzw. Torsion der Welle verdrehen sich auch die beiden Scheiben relativ zueinander. Hierdurch entsteht eine entsprechend der Verdrehung große Öffnung zwischen den Aussparungen oder Fenstern der beiden Scheiben. Die durch die Aussparungen der Scheiben hindurchtretende Lichtintensität wird gemessen, wobei an einer Seite der Scheiben eine Lichtquelle und an der gegenüberliegenden Seite der Scheiben ein Lichtmesser angeordnet ist. Die Lichtdurchlässigkeit verändert sich proportional zum Drehmoment.

### Nächstliegender Stand der Technik

Aus DE 198 49 225 C1 ist eine Vorrichtung zur opto-elektronischen Drehmomentbestimmung an einem Maschinenelement unter Verwendung zweier an dem Maschinenelement angebrachter paralleler Kodierscheiben mit jeweils radial auf deren Umfang verteilten Rasterstrichen oder Lichtfenstern bekannt. Die Rasterstriche sind in zwei konzentrischen Zonen angeordnet. An der einen Seite der Kodierscheiben ist eine Lichtquelle angeordnet, der an der gegenüberliegenden Seite der Scheiben ein Lichtmesser in Form von Fotodioden zugeordnet ist. An dem Maschinenelement in Form einer Welle befindet sich ein Torsionsabschnitt verringerten Durchmessers, auf welchem Hülsen aufgeschrumpft sind. Die benachbarten, freien Enden der Hülsen tragen die Kodierscheiben. Beim Auftreten eines Drehmomentes werden die beiden äußeren Enden der Welle gegeneinander verdreht. Die Hülsen übertragen die Torsion auf die an ihren freien Enden sitzenden Kodierscheiben, die sich in gleichem Maße gegeneinander verdrehen. Dadurch werden die Durchtrittsquerschnitte für das hindurchtretende Licht verändert. Die sich proportional mit der Torsion ändernde durchtretende Lichtmenge wird von den Fotodioden aufgenommen und in elektrische Spannung umgesetzt. Bei der anschließenden elektronischen Weiterverarbeitung werden schließlich die Messdaten zum Drehmoment ermittelt.

### Aufgabe der vorliegenden Erfindung

Die Aufgabe der vorliegenden Erfindung besteht darin, eine neuartige Vorrichtung zur opto-elektronischen Drehmomentbestimmung zur Verfügung zu stellen, welche ohne großen Aufwand eine genaue Drehmomenterfassung sowohl im niedrigen als auch im hohen Drehmomentbereich ermöglicht.

### Lösung der Aufgabe

Die vorstehende Aufgabe wird durch die gesamte Lehre des Patentanspruchs 1 gelöst. Der unabhängige Patentanspruch 12 betrifft einen Antrieb zum Betätigen eines Maschinenelements oder einer Armatur, insbesondere einer Schieberarmatur, welche mit der erfindungsgemäßen Vorrichtung zur opto-elektronischen Drehmomentbestimmung ausgestattet ist. Zweckmäßige Ausgestaltungen der vorliegenden Erfindung sind in den abhängigen Ansprüchen beansprucht.

Erfindungsgemäß ist ein erster Kupplungsflansch vorgesehen, der mit einer ersten antriebseitigen Welle in Verbindung steht, sowie ein zweiter Kupplungsflansch, der mit einer zweiten abtriebseitigen Welle in Verbindung steht, wobei eine der beiden Wellen in axialer Richtung unter Aufbau eines Gegendrucks verschiebbar angeordnet ist. Die jeweilige Stirnfläche des ersten sowie zweiten Kupplungsflansches weist mindestens eine schiefe Ebene auf, wobei die schiefen Ebenen der sich gegenüberliegenden Stirnflächen in einer Grundstellung einen ein Drehmoment übertragenden Verbund bilden, und bei Erhöhung des Drehmoments eine Veränderung der Drehwinkelstellung der Kupplungsflansche zueinander erfassbar und daraus das Drehmoment ermittelbar ist. Je nach Größe des einwirkenden Drehmoments verschieben sich die schiefen Ebenen mehr oder weniger zueinander ab, sodass aus der jeweiligen Drehwinkelstellung der Kupplungsflansche zueinander das Drehmoment ermittelbar ist. Die Drehwinkelstellung des jeweiligen Kupplungsflansches wird durch Lichtschranken erfasst. Aus dem Drehwinkelversatz bzw. dem daraus resultierenden Zeitversatz der Drehwinkelstellung der Kupplungsflansche wird schließlich das Drehmoment ermittelt. Durch das Abgleiten bzw. Verdrehen der schiefen Ebenen zueinander kann sowohl eine Bestimmung von sehr geringen Drehmomenten als auch von relativ hohen Drehmomenten möglich sein, ohne dass wesentliche bauliche Veränderungen durchgeführt werden müssen. Somit liegt eine Kupplung vor, die gleichzeitig eine Drehmomenterfassung erlaubt.

Um einen Gleitvorgang der schiefen Ebenen aufeinander zu ermöglichen, weisen diese sehr glatte Oberflächen auf, sodass der Messwert nicht durch eine Reibung oder Haftung der schiefen Ebenen aufeinander verfälscht wird. Die erfindungsgemäße Vorrichtung ermöglicht es mittels der Lichtschranken zudem, auch in einfacher Weise eine Drehzahlmessung durchzuführen.

Die schiefen Ebenen sind vorteilhafterweise konstruktiv so ausgestaltet, dass sie in Drehrichtung aufeinander abgleiten. Vorzugsweise können sie in Draufsicht der Kreisform der Kupplungsflansche angepasst sein. Besonders vorzugsweise sind sie ringabschnittsförmig ausgebildet.

Vorteilhafterweise kann die Erhöhung des Drohmoments über die schiefen Ebenen drehrichtungsunabhängig sein. Folglich ist auch eine Erfassung des Drehmoments in beide Drehrichtungen möglich, ohne dass bauliche Veränderungen erforderlich sind.

Mit Vorteil können die schiefen Ebenen auf dem jeweiligen ersten bzw. zweiten Kupplungsflansch spiegelsymmetrisch angeordnet sein. Insbesondere können die schiefen Ebenen zu zwei oder mehr Symmetrieachsen spiegel- oder achssymmetrisch angeordnet sein. Mit Vorteil können die schiefen Ebenen zu zwei zueinander rechtwinklig angeordneten Symmetrieachsen spiegelsymmetrisch angeordnet sein. Dadurch kann die Erfassung des Drehmoments drehrichtungsunabhängig werden und in beiden Drehrichtungen werden bei Einwirken des gleichen Drehmoments die gleichen Kräfte übertragen. Außerdem erfolgt eine symmetrisch gleichmäßige Einwirkung der Kräfte im Kupplungsbereich.

Bei einem Überschreiten einer bestimmten Drehwinkelstellung der Kupplungsflansche zueinander können vorteilhafterweise die schiefen Ebenen wieder in ihre Grundstellung übergehen. Dadurch wird ein mechanischer Überlastschutz bereitgestellt, der insbesondere dann von Vorteil ist, wenn die elektronische Überlastschutzerfassung ausfällt oder diese nicht vorhanden ist. Dadurch wird eine Beschädigung oder Zerstörung des Kupplungsbereichs, insbesondere der Kupplungsflansche sowie der beiden Wellen vermieden.

Zweckmäßigerweise können die schiefen Ebenen in ihren oberen Bereichen abgeflacht sein. Dies hat zum einen den Vorteil, dass sich bei einem entsprechend großen Drehmoment die in die schiefen Ebenen einwirkenden Kräfte verteilen und dort nicht zu erhöhten Spannungsbereichen führen. Ein weitere Vorteil besteht darin, dass beim Auslösen des mechanischen Überlastschutzes, d. h. bei Überschreiten einer bestimmten Drehwinkelstellung der Kupplungsflansche, die schiefen Ebenen über den abgeflachten Bereich kontinuierlich in ihre Grundstellung übergehen.

Zweckmäßigerweise kann auf die in axialer Richtung verschiebbare Welle eine Rückstellkraft wirken. Die Rückstellkraft bewirkt, dass die in axialer Richtung verschiebbare Welle gegen die Stirnseite bzw. den Kupplungsflansch der anderen Welle gedrückt wird, bei Einwirken eines Drehmoments jedoch elastisch nachgibt, sodass eine Verdrehung der Welle und damit eine Messung des Drehmoments über die Lichtschranken möglich ist. Die Rückstellkraft kann zum Beispiel mittels der Anordnung einer Feder am Ende der Welle realisiert sein. Es können auch andere elastische Lagerungen der Welle vorgesehen sein.

Durch Festlegung der Charakteristik der Rückstellkraft, insbesondere der Stärke bzw. Federkonstante, kann das zu erfassende Drehmoment bzw. der Drehmomentbereich festgelegt werden.

Bei der in axialer Richtung verschiebbaren Welle kann es sich um die antriebseitige Welle handeln, die zum Beispiel in einem Motorgehäuse endseitig federgelagert ist. Es ist aber auch möglich, dass die antriebseitige Welle in einem Kupplungsgehäuse, in welchem die Kupplungsflansche angeordnet sind, elastisch gelagert, zum Beispiel federgelagert, ist.

Damit die Drehbewegung der Kodierscheiben sowie die Verdrehung der Kodierscheiben zueinander mittels der Lichtschranken erfasst werden kann, können die Kodierscheiben in regelmäßiger Anordnung um ihren Umfang Ausnehmungen aufweisen. Durch die Ausnehmungen kann das Licht der Lichtschranken hindurchtreten, wodurch eine Erfassung der Drehbewegung möglich ist. Aus dem Zeitversatz der Lichtschrankensignale kann schließlich das Drehmoment ermittelt werden.

Die Vorrichtung kann ein Gehäuse aufweisen, welches den ersten und zweiten Kupplungsflansch umgibt. An diesem Gehäuse können auch die Lichtschranken sicher befestigt werden, wobei sie zu den Kodierscheiben korrekt ausgerichtet sind.

Der erfindungsgemäße Antrieb zum Betätigen eines Maschinenelements oder einer Armatur, insbesondere einer Schieberarmatur, weist einen Motor auf, welcher einen Stator, einen Rotor sowie eine Motorwelle umfasst, wobei die Motorwelle mit einer Vorrichtung zur opto-elektronischen Drehmomentbestimmung - wie sie oben beschrieben ist - ausgestattet ist. Vorteilhafterweise kann dabei vorher ein bestimmtes Drehmoment eingestellt werden, welches nicht überschritten werden darf. Die Drehmomentmessung dient damit der Vermeidung einer Überlastung, sodass zum Beispiel der Antrieb einer Schieberarmatur nicht beschädigt wird. Eine entsprechende Schieberarmatur kann z.B. Drehmomente in einem Bereich von ca. 150 Nm aufnehmen, die die Vorrichtung zur Drehmomentbestimmung auch erfassen kann.

Bei einem entsprechenden Antrieb zum Betätigen eines Maschinenelements oder einer Armatur kann entweder die Motorwelle oder der Rotor des Motors in axialer Richtung verschiebbar sein, sodass das Abgleiten der schiefen Ebenen aufeinander erfolgen kann.

Auf die in axialer Richtung verschiebbare Motorwelle oder Rotor kann eine Rückstellkraft in Form einer Federkraft wirken.

Der Motor kann ein Gehäuse aufweisen, wobei sich jedoch die Vorrichtung zur opto-elektronischen Drehmomentbestimmung außerhalb dieses Gehäuses befindet. Auf diese Weise ist die Vorrichtung zur Drehmomentbestimmung leicht zugänglich und es steht ausreichend Platz zur Anbringung der Kodierscheiben sowie der Lichtschranken zur Verfügung.

### Beschreibung der Erfindung anhand von Ausführungsbeispielen

Die Erfindung ist anhand von vorteilhaften Ausführungsbeispielen gemäß den Zeichnungsfiguren näher erläutert. Diese zeigen:
- Fig. 1: eine Prinzipdarstellung einer Vorrichtung zur opto-elektronischen Drehmomentbestimmung, teilweise im Schnitt;
- Fig. 2: eine Prinzipdarstellung eines Antriebs zum Betätigen eines Maschinenelements, teilweise im Schnitt; sowie
- Fig. 3: drei perspektivische Darstellungen (Fig. 3a - 3c) im Bereich der Kupplungsflansche, wobei der zweite Kupplungsflansch jeweils in einer anderen Drehposition zum ersten Kupplungsflansch steht.

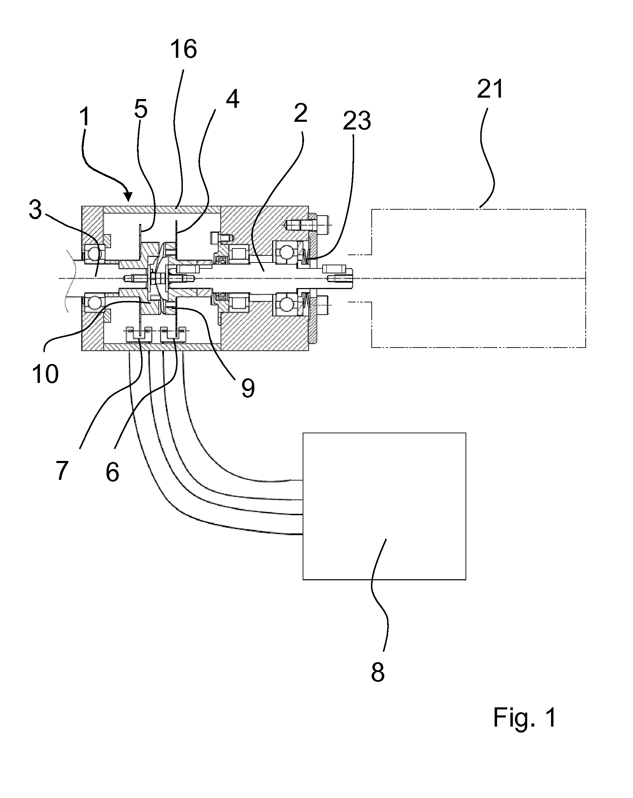

Bezugsziffer 1 bezeichnet die erfindungsgemäße Vorrichtung zur opto-elektronischen Drehmomentbestimmung in ihrer Gesamtheit. Wie aus Fig. 1 hervorgeht, umfasst die Vorrichtung eine erste antriebseitige Welle 2 sowie eine zweite abtriebseitige Welle 3. Ferner ist eine erste Kodierscheibe 4 vorgesehen, die mit der antriebseitigen Welle 2 drehfest verbunden ist. Eine zweite Kodierscheibe 5 ist mit der abtriebseitigen Welle 3 drehfest verbunden. Eine erste Lichtschranke 6 tastet die Drehbewegung der ersten Kodierscheibe 4 ab und eine zweite Lichtschranke 7 tastet die Drehbewegung der zweiten Kodierscheibe 5 ab. Eine elektronische Auswerteeinheit 8 dient der Erfassung und Auswertung der von der ersten Lichtschranke 6 sowie der zweiten Lichtschranke 7 stammenden Signale. Weiterhin dient diese dazu, bestimmte Drehmomentkennlinien zu hinterlegen. Diese erlauben es, aktuelle Messungen mit letzteren zu vergleichen.

Auf die in axialer Richtung verschiebbare Welle 2 (siehe Fig. 1) wirkt eine Rückstellkraft einer Feder 23. Die Feder 23 bewirkt einen Druck der antriebseitigen Welle 2 gegen die abtriebseitige Welle 3. Sie ermöglicht eine Verdrehung der schiefen Ebenen 11, 12 bzw. 13, 14 zueinander, indem die antriebseitige Welle 2 zurückgedrückt wird.

Weiterhin steht ein erster Kupplungsflansch 9 mit der ersten antriebseitigen Welle 2 in Verbindung, während ein zweiter Kupplungsflansch 10 mit der zweiten abtriebseitigen Welle 3 verbunden ist. Im gezeigten Ausführungsbeispiel ist die antriebseitige Welle 2 in axialer Richtung verschiebbar angeordnet.

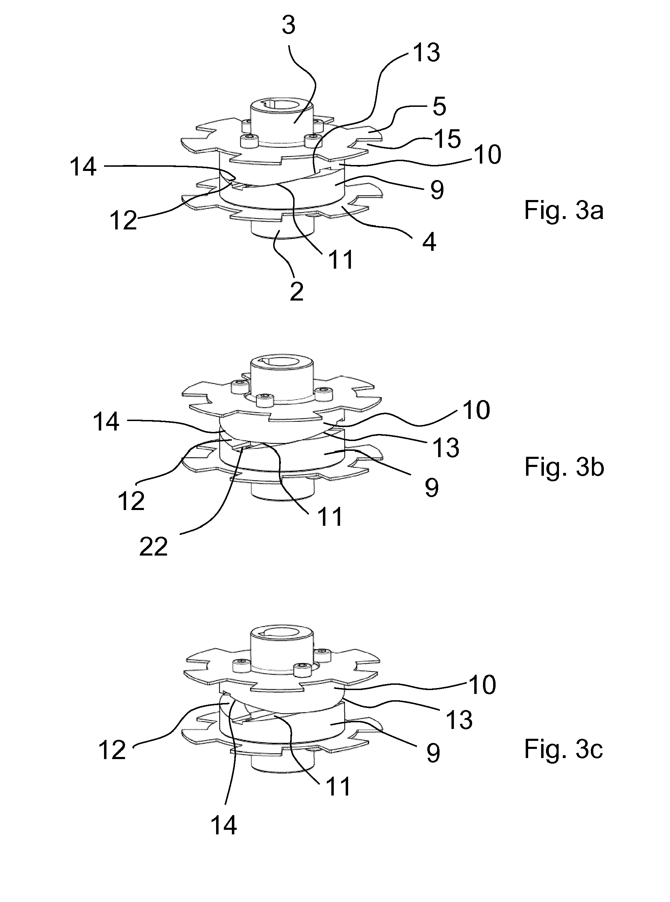

Der Kupplungsbereich von an- und abtriebseitiger Welle 2, 3 ist in Fig. 3 detailliert dargestellt. Die jeweilige Stirnfläche des ersten sowie zweiten Kupplungsflansches 9, 10 weist jeweils schiefe Ebenen 11, 12 bzw. 13, 14 auf. Die schiefen Ebenen 11, 12 bzw. 13, 14 der sich gegenüberliegenden Stirnflächen bilden in einer Grundstellung, welche Fig. 3a zeigt, einen ein Drehmoment übertragenden Verbund. Bei Erhöhung des Drehmoments, beispielsweise dann, wenn an der abtriebseitigen Welle 3 eine Kraft angreift, erfolgt zum einen ein axiales Verschieben der antriebseitigen Welle 2, zum anderen eine Veränderung der Drehwinkelstellung der Kupplungsflansche 9, 10 zueinander (siehe Fig. 3b), woraus das Drehmoment ermittelbar ist. Die Drehwinkelstellung der Kupplungsflansche 9, 10 zueinander ist mittels der Kodierscheiben 4, 5 und der daran angeordneten Lichtschranken 6, 7 erfassbar. Über den Zeitversatz der Signale der Lichtschranken 6, 7 wird eine Umrechnung in das einwirkende Drehmoment ermöglicht.

Bei Erhöhung des Drehmoments gleiten die schiefen Ebenen 11, 12 bzw. 13, 14 der sich gegenüberliegenden Stirnflächen aneinander ab, wie dies in den verschiedenen Drehpositionen der Fig. 3a) bis c) dargestellt ist.

Die Erhöhung der Drehmoments über die schiefen Ebenen 11, 12 bzw. 13, 14 ist drehrichtungsunabhängig. Die Vorrichtung zur Drehmomentbestimmung ist demnach sowohl für den Rechts- als auch Linkslauf geeignet.

Wie auch aus Fig. 3 hervorgeht, sind die schiefen Ebenen 11, 12 bzw. 13, 14 auf dem jeweiligen ersten bzw. zweiten Kupplungsflansch 9, 10 spiegelsymmetrisch angeordnet. Im dargestellten Ausführungsbeispiel befinden sich auf jedem Kupplungsflansch 9, 10 vier schiefe Ebenen, wobei jeweils zwei davon an ihrem oberen Bereich ineinander übergehen. Im unteren Bereich sind jeweils zwei der gegenüberliegenden schiefen Ebenen durch eine Nut 22 unterbrochen, in welcher jeweils ein Befestigungsmittel zur Verbindung mit der jeweiligen Kodierscheibe 4, 5 angebracht ist. Die spiegelsymmetrische Anordnung der schiefen Ebenen 11, 12 bzw. 13, 14 sorgt für eine gleichmäßige Kräfteverteilung des einwirkenden Drehmoments sowie eine drehrichtungsunabhängige Erfassung des Drehmoments.

Bei einem Überschreiten einer bestimmten Drehwinkelstellung der Kupplungsflansche 9, 10 zueinander gehen die schiefen Ebenen 11, 12 bzw. 13, 14 in ihre Grundstellung über. Die in Fig. 3c) dargestellte Drehwinkelstellung der Kupplungsflansche 9, 10 zeigt, wie sich die gegenüberliegenden schiefen Ebenen in ihren jeweiligen oberen, abgeflachten Bereichen berühren. Die beiden Wellen 2, 3 sind in dieser Position nicht mehr gekuppelt und bei weiterer Verdrehung der Wellen 2, 3 gehen die schiefen Ebenen wieder in ihre Grundstellung über, womit ein mechanischer Überlastungsschutz gegeben ist.

Indem die oberen Bereiche der schiefen Ebenen 11, 12 bzw. 13, 14 abgeflacht sind, erfolgt ein kontinuierlicher Übergang zurück in die Grundstellung.

Wie aus Fig. 3 hervorgeht, weisen die Kodierscheiben 4, 5 in regelmäßiger Anordnung um ihren Umfang Ausnehmungen 15 auf, durch welche das Licht der Lichtschranken 6, 7 fällt. Aus dem Zeitversatz der erfassten Lichtschrankensignale der Kodierscheiben 4 und 5 erfolgt in der elektronischen Auswerteeinheit 8 eine Ermittlung bzw. Umrechnung in das Drehmoment.

Die Vorrichtung 1 kann ein Gehäuse 16 aufweisen, welches den ersten und zweiten Kupplungsflansch 9, 10 beinhaltet. Auch die Kodierscheiben 4, 5 können demnach zweckmäßigerweise innerhalb des Gehäuses 16 angeordnet sein. Die Lichtschranken 6, 7 können innen am Gehäuserand befestigt werden.

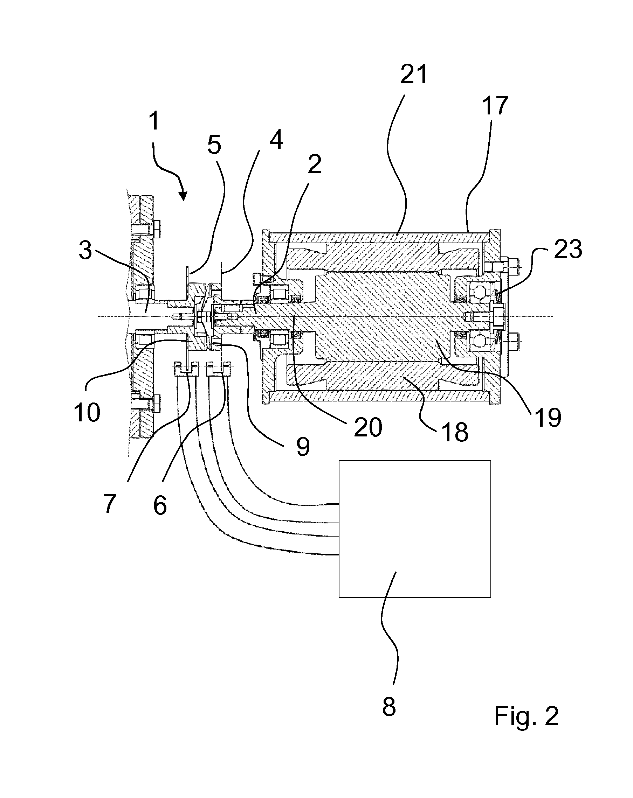

In Fig. 2 ist ein Antrieb zum Betätigen eines Maschinenelements oder einer Armatur, insbesondere einer Schieberarmatur, dargestellt. Dieser Antrieb kann einen Motor 17 aufweisen, der einen Stator 18, einen Rotor 19 sowie eine Motor-welle 20 umfassen kann. Die Motorwelle 20 ist mit der oben beschriebenen Vorrichtung 1 zur opto-elektronischen Drehmomentbestimmung ausgestattet. Im dargestellten Ausführungsbeispiel ist die Motorwelle 20 in axialer Richtung verschiebbar, wobei auf sie eine Rückstellkraft einer Feder 23 wirkt.

Die Vorrichtung 1 zur opto-elektronischen Drehmomentbestimmung befindet sich außerhalb des Gehäuses 21, welches den Motor 16 umgibt. Der Kupplungsbereich ist damit für die Anordnung der Bauteile zur opto-elektronischen Drehmomentbestimmung, wie der Kodierscheiben 4, 5 sowie der Lichtschranken 6, 7 frei zugänglich. Mit dem dargestellten Antrieb können zum Beispiel Schieberarmaturen (nicht dargestellt), z.B. gehäuselose Schieberarmaturen zum Absperren von Wasserströmen an Rohr- oder Kanalleitungen, betätigt werden. Mittels der Vorrichtung zur Drehmomentbestimmung kann ein maximales Drehmoment festgelegt werden, damit z.B. eine Schieberarmatur z.B. im Falle eines Hindernisses nicht beschädigt wird. Bei Überschreiten des festgelegten Drehmoments können entweder die Kupplungsflansche 9, 10 mit ihren schiefen Ebenen 11, 12 bzw. 13, 14 in ihre Grundstellung übergehen und/oder es wird ein Alarm ausgelöst.

### BEZUGSZEICHENLISTE

- 1: Vorrichtung
- 2: antriebseitige Welle
- 3: abtriebseitige Welle
- 4: erste Kodierscheibe
- 5: zweite Kodierscheibe
- 6: erste Lichtschranke
- 7: zweite Lichtschranke
- 8: elektronische Auswerteeinheit
- 9: erster Kupplungsflansch
- 10: zweiter Kupplungsflansch
- 11: schiefe Ebene
- 12: schiefe Ebene
- 13: schiefe Ebene
- 14: schiefe Ebene
- 15: Ausnehmung
- 16: Gehäuse
- 17: Motor
- 18: Stator
- 19: Rotor
- 20: Motorwelle
- 21: Gehäuse
- 22: Nut
- 23: Feder

## Patentansprüche

**1.** Vorrichtung zur opto-elektronischen Drehmomentbestimmung mit
einer ersten antriebseitigen Welle (2),
einer zweiten abtriebseitigen Welle (3),
einer ersten Kodierscheibe (4), die mit der ersten antriebseitigen Welle (2) drehfest verbunden ist,
einer zweiten Kodierscheibe (5), die mit der zweiten abtriebseitigen Welle (3) drehfest verbunden ist,
einer ersten Lichtschranke (6), die die Drehbewegung der ersten Kodierscheibe (4) abtastet,
einer zweiten Lichtschranke (7), die die Drehbewegung der zweiten Kodierscheibe (5) abtastet,
einer elektronischen Auswerteeinheit (8) zur Erfassung und Auswertung der von der ersten Lichtschranke (6) sowie zweiten Lichtschranke (7) stammenden Signale,
**dadurch gekennzeichnet, dass**
ein erster Kupplungsflansch (9) vorgesehen ist, der mit der ersten antriebseitigen Welle (2) in Verbindung steht,
ein zweiter Kupplungsflansch (10) vorgesehen ist, der mit der zweiten abtriebseitigen Welle (3) in Verbindung steht,
eine der beiden Wellen (2 oder 3) in axialer Richtung verschiebbar angeordnet ist,
die jeweilige Stirnfläche des ersten sowie zweiten Kupplungsflansches (9, 10) mindestens eine schiefe Ebene (11, 12, 13, 14) aufweist,
die schiefen Ebenen (11, 12 bzw. 13, 14) der sich gegenüberliegenden Stirnflächen in einer Grundstellung einen ein Drehmoment übertragenden Verbund bilden, und bei Erhöhung des Drehmoments eine Veränderung der Drehwinkelstellung der Kupplungsflansche (9, 10) zueinander erfassbar und daraus das Drehmoment ermittelbar ist.

**2.** Vorrichtung nach Anspruch 1, **dadurch gekennzeichnet, dass** bei Erhöhung des Drehmoments die schiefen Ebenen (11, 12 bzw. 13, 14) der sich gegenüberliegenden Stirnflächen aneinander abgleiten.

**3.** Vorrichtung nach Anspruch 1 oder 2, **dadurch gekennzeichnet, dass** die Erhöhung des Drehmoments über die schiefen Ebenen (11, 12 bzw. 13, 14) drehrichtungsunabhängig ist.

**4.** Vorrichtung nach mindestens einem der vorhergehenden Ansprüche, **dadurch gekennzeichnet, dass** die schiefen Ebenen (11, 12, 13, 14) auf dem jeweiligen ersten bzw. zweiten Kupplungsflansch (9, 10) spiegelsymmetrisch angeordnet sind.

**5.** Vorrichtung nach mindestens einem der vorhergehenden Ansprüche, **dadurch gekennzeichnet, dass** bei einem Überschreiten einer bestimmten Drehwinkelstellung der Kupplungsflansche (9, 10) zueinander die schiefen Ebenen (11, 12 bzw. 13, 14) in ihre Grundstellung übergehen.

**6.** Vorrichtung nach mindestens einem der vorhergehenden Ansprüche, **dadurch gekennzeichnet, dass** die schiefen Ebenen (11, 12, 13, 14) in ihren oberen Bereichen abgeflacht sind.

**7.** Vorrichtung nach mindestens einem der vorhergehenden Ansprüche, **dadurch gekennzeichnet, dass** auf die in axialer Richtung verschiebbare Welle (2 oder 3) eine Rückstellkraft wirkt.

**8.** Vorrichtung nach mindestens einem der vorhergehenden Ansprüche, **dadurch gekennzeichnet, dass** es sich bei der in axialer Richtung verschiebbaren Welle (2 oder 3) um die antriebseitige Welle (2) handelt.

**10.** Vorrichtung nach mindestens einem der vorhergehenden Ansprüche, **dadurch gekennzeichnet, dass** die Kodierscheiben (4, 5) in regelmäßiger Anordnung um ihren Umfang Ausnehmungen (15) aufweisen.

**11.** Vorrichtung nach mindestens einem der vorhergehenden Ansprüche, **dadurch gekennzeichnet, dass** die Vorrichtung (1) ein Gehäuse (16) aufweist, welches den ersten und zweiten Kupplungsflansch (9, 10) umgibt.

**12.** Antrieb zum Betätigen eines Maschinenelements oder einer Armatur, insbesondere einer Schieberarmatur, mit
einem Motor (17) umfassend einen Stator (18), einen Rotor (19) sowie eine Motorwelle (20), **dadurch gekennzeichnet, dass**
die Motorwelle (20) mit einer Vorrichtung (1) zur opto-elektronischen Drehmomentbestimmung nach mindestens einem der Ansprüche 1 - 11 ausgestattet ist.

**13.** Antrieb nach Anspruch 12, **dadurch gekennzeichnet, dass** die Motorwelle (20) in axialer Richtung verschiebbar ist.

**14.** Antrieb nach Anspruch 12, **dadurch gekennzeichnet, dass** der Rotor (19) in axialer Richtung verschiebbar ist.

**15.** Antrieb nach Anspruch 13 oder 14, **dadurch gekennzeichnet,**
**dass** auf die in axialer Richtung verschiebbare Motorwelle (20) oder Rotor (19) eine Rückstellkraft wirkt.

**16.** Antrieb nach mindestens einem der Ansprüche 12 - 15, **dadurch gekennzeichnet, dass** der Motor (16) ein Gehäuse (21) aufweist und sich die Vorrichtung (1) zur opto-elektronischen Drehmomentbestimmung außerhalb des Gehäuses (21) befindet.
